Europäisches Patentamt

European Patent Office

Office européen des brevets

(19)

(11) Publication number: **0 143 506**
A2

(12) # EUROPEAN PATENT APPLICATION

(21) Application number: **84201748.5**

(22) Date of filing: **28.11.84**

(51) Int. Cl.⁴: **H 01 Q 1/36**, C 12 H 1/16

(30) Priority: **29.11.83 ES 276031**

(43) Date of publication of application: **05.06.85**
**Bulletin 85/23**

(84) Designated Contracting States: **AT BE CH DE FR GB IT**
**LI LU NL SE**

(71) Applicant: **IONCOOR, S.A., Bréton de los Herreros 68,**
**E-28003 Madrid (ES)**

(72) Inventor: **Lopez Polo, Manuel, Cayuco 1a Apartamentos**
**La Bruja, Palma Nova-Calvia Mallorca (ES)**

(74) Representative: **van der Beek, George Frans et al,**
**Nederlandsch Octrooibureau Johan de Wittlaan 15 P.O.**
**Box 29720, NL-2502 LS 's-Gravenhage (NL)**

(54) **Radiation interception coil.**

(57) A radiation and ion interception coil formed of a copper rod of desirable size and cross section wound in a clockwise direction to form a helix with a plurality of proximate turns of constant diameter with a pole on each end of the coil. Disposed within the coil is another rod with poles on each end, the pole on the lower end being adapted to be submerged in a liquid when the coil is placed about the neck of a bottle.

EP 0 143 506 A2

## RADIATION INTERCEPTION COIL

### TECHNICAL FIELD

This invention relates to a radiation interception coil for placing on a bottle containing liquid to ionically energize the liquid.

### Background of the Invention

It is sometimes desired to ionically energize a liquid before it is consumed to enhance the qualities of the beverage. In the atmosphere which surrounds us there are a large number of ions, e.g., negative ions, whose effects would be beneficial to humans if this energy and the energy of the radiation in the atmosphere could be intercepted and incorporated into an article of consumption, such as water.

### Summary of the Invention

The present invention provides a way to capture ions and radiant energy freely available from the atmosphere and transmit them to a liquid for human consumption.

It has now been found that the same can be accomplished in a highly efficient manner by forming a radiation interception coil from a copper rod or wire of variable or desirable size and cross section wound in a clockwise direction to form a coil with a plurality of proximate turns, preferably defining a substantially cylindrical interior adapted to fit about the neck of a bottle. The ends of the coil have poles of a size larger than the diameter of the copper rod exposed to the atmosphere. A shaft with poles on each end is axially disposed in the interior of the coil and connected to an end turn thereof for support. When the coil is disposed about the neck of a bottle, the shaft enters the bottle with a pole thereof submerged in the liquid to transmit ionic energy thereto. The liquid absorbs the energy and is benefited thereby as discussed hereinabove.

The coil, shaft, and three of the poles remain exposed to the atmosphere when the device is being used so that cosmic or radiant energy, including ionic energy, is intercepted and transferred to the liquid in a simple, highly efficient manner. The construction of the device results in great economy which will permit its purchase by the general public.

## Brief Description of Drawings

The invention is described in detail below with reference to the drawings, which illustrate only a specific example of the invention. In the drawings:

Figure 1 is a partial elevational view of the inventive radiation interception coil;

Figure 2 is a view in elevation of the coil in partial cross section shown disposed about the neck of a bottle; and

Figure 3 is a top plan view of the coil of Figure 1.

## Detailed Description

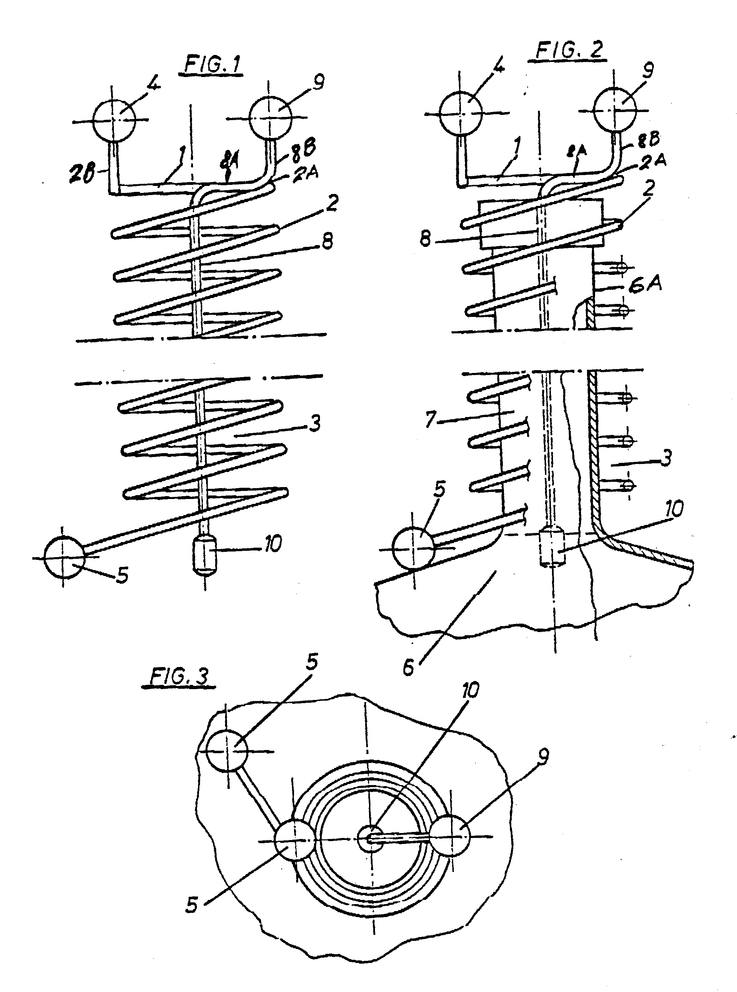

Referring specifically to the sheet of drawings, Figure 1 is a view in elevation of the coil or device, while Figure 2 is a view similar to the preceding one in which the coil or device is shown in partial cross section, the coil being arranged around the neck of the bottle in such a manner that the end of its inner axial rod or shaft is introduced into the bottle and is in contact with the liquid which the bottle contains; Figure 3 is a top view of the coil in place on the bottle.

As shown in the sheet of drawings, the device consists of a rod or wire 1 of copper or any other conductive metal of desirable size or cross section and has a length which is suitable for forming a helix therefrom, thus providing a coil or winding 2, all of the turns of which preferably have substantially the same diameter. Another rod or shaft 8 is bent so that it is coaxial with the axis of the coil shown in Fig. 2, the winding defining a cylindrical shape. It should be pointed out that the winding is characterized by the fact that it extends and turns in the clockwise direction and defines an inner cylindrical space or receptacle 3. The two extremities of the continuously wound rod or coil terminate into thickened or enlarged ends or poles, the upper enlarged pole being directed vertically upward, and pole 5 at the bottom of the coil being directed tangentially and horizontally towards the outside. It should be noted that the poles are of substantially larger cross section than the body of rod 1. Both poles 4 and 5 are of copper or any other material. Although the example proposed in the drawing shows poles of spherical shape, they could be of other shape, regular or irregular, provided that they are suitable for the functions which they exercise. Upper pole 4 acts as interceptor of ions, and the ions are conducted through coil 2 until they reach lower pole 5. Pole 5 rests directly on bottle 6 when the device is placed on the neck 7 of the bottle, as shown in Figure 2 of the drawing.

Lower pole 5 is supported directly on the bottle, so that the ions are transmitted to the bottle as well as the liquid which it contains as will become clear from the discussion which follows. Coil 2 includes within it inner rod or shaft 8 which is welded to the coil on its first turn at 2A. Shaft 8 is located along the inner axis of the coil and terminates at its top in a thickened portion or pole 9 of spherical shape. Shaft 8 is bent in generally a perpendicular manner so that pole 9 is substantially diametrically opposite upper pole 4 (the ion interceptor). Shaft 8 terminates at its lower end in a thickened portion or pole 10 which is disposed coaxially with the axis of the bottle. Pole 10 may be spherical or of any other shape. As can be noted from the drawing, lower pole 10 of shaft 8 is located within the coil, and the vertical upper end is arranged, as we have stated, facing the upper terminal pole 4. Both poles 9 and 10 are of substantially larger cross section than the cross section of shaft 8. It should be noted that the lower end 10 of the axial rod, which is introduced into the bottle will remain in contact with the liquid of the receptacle so that this liquid is the object of the ionic energizing discussed hereinabove.

In summary, the invention is directed to a radiation and ion interception coil for use with a container for liquids having an open neck portion and a body portion coextensive with the neck portion. The coil 2 is made of a rod or wire 1 of conductive material helically wound in a clockwise direction, the coil being dimensioned to fit around and be supported by the neck portion of the container, the coil having a top portion and a bottom portion. The top portion of the coil terminates into an upwardly extending branch 2B having a first pole 4 at its end of cross section substantially larger than the diameter of the rod, the bottom portion terminating into a branch extending laterally and tangentially from the coil and having a second pole 5 at its end of cross section substantially larger than the cross section of said rod or wire.

A shaft 8 of the conductive rod material is provided supported by and passing coaxially through the coil from the top portion to the bottom portion thereof, the shaft being branched at its top end and offset laterally (8A) from its axis with its end 8B bent upwardly from the offset, the end terminating into a third pole 9 disposed opposite to first pole 4. The shaft is coupled by welding its offset 8A to the coil at 2A. The cross section of pole 9 is substantially larger than the cross section of the shaft, the shaft at its bottom end terminating into a fourth pole 10 of cross section substantially larger than the diameter of the shaft, the fourth pole 10 extending beyond the bottom of the coil as shown.

When the coil 2 is fitted around the neck 6A of container 6 with the shaft 8 extending coaxially within and through the opening of the neck, the fourth pole will be submerged in liquid when liquid is added to the container, and the second pole 5 will be supported on an outer surface portion of the body of the container.

Preferably, shaft 8 is laterally offset at substantially right angles to its axis, with the end 8B thereof bent upwardly at substantially right angles to the offset. The coil has a substantially cylindrical shape and is preferably made of copper, all of the poles being preferably spherical or of identical shape.

The invention is also directed to the combination of a radiation and ion interception coil and a container 6 cooperably associated with the coil, the container having an open neck portion and a body portion coextensive with the neck portion 6A. The combination comprising, a coil made of a rod or wire 1 of conductive material helically wound in a clockwise direction disposed around neck 6A of the container, the coil having a top portion associated with the top of the neck and a bottom portion extending to the bottom end of the neck and resting against the body portion of said container 6.

The top portion of the coil terminates into an upwardly extending branch 2B having a first pole 4 at its end of cross section substantially larger than the diameter of the rod, the bottom of the coil terminating into a branch extending laterally and tangentially from the coil and having a second pole 5 at its end of cross section substantially larger than the cross section of said rod resting on a surface portion of the body of said container.

A shaft of the conductive rod material is provided supported by and passing coaxially though the coil and into the neck of the container from the top portion to the bottom portion thereof, the shaft being branched at its top end and offset (8A) laterally from its axis with its end bent (8B) upwardly from offset 8A and terminating into a third pole 9 disposed opposite to the first pole rising above the opening of said neck portion, the cross section of the pole being substantially larger than the cross section of the shaft. The shaft at its bottom end within the container terminates into a fourth pole 10 of cross section substantially larger than the diameter of the shaft, the fourth pole extending beyond the bottom of the coil and into the container sufficiently to be submerged in liquid subsequently added to the container.

The structure and function of the coil or device of the invention having been sufficiently described, it should be noted that features of a subsidiary nature, such as the height and, accordingly, the number of turns of the device and the shape thereof, which may be frustoconical or of any other shape, whether or not regular, can be varied, provided that such modifications do not alter the essence of the invention as set forth in the specification and claims.

0143506

WHAT IS CLAIMED IS:

1.    A radiation and ion interception coil comprising a rod wound to form a coil having a plurality of turns in which the winding of the coil is in a clockwise direction, one of the ends of said coil terminating in an upper substantially vertical branch which ends in a first pole of substantially larger cross section than the cross section of the body of said rod, the lower end of said coil having a second pole also of substantially larger cross section than the cross section of the body of said rod, said second pole protruding in a substantially horizontal tangential direction with respect to said coil and adapted to rest on the outer part of a container for liquid on which said coil is arranged, said coil being adapted to receive the opening of said container within its interior; a shaft attached to said coil and configured to protrude axially within the interior of said coil, said shaft being of sufficient length to extend into said container when said coil is placed thereon and having a third pole of substantially larger cross section than the cross section of said shaft along its length at the upper end thereof disposed     .  opposite to said first pole, the lower end of said shaft having a fourth pole also of substantially larger cross section than the cross section of said shaft, said fourth pole being submerged within said liquid when said coil is disposed about the opening of said container.

2.    A radiation and ion interception coil for use with a container for liquids having an open neck portion and a body portion coextensive with the neck portion, said coil comprising,

a rod or wire of conductive material helically wound in a clockwise direction to provide a coil adapted to fit around and be supported by said neck portion,

said coil having a top portion and a bottom portion

the top portion terminating into an upwardly extending branch having a first pole at its end of cross section substantially larger than the diameter of the rod,

the bottom portion terminating into a branch extending laterally and tangentially from said coil and having a second pole at its end of cross section substantially larger than the cross section of said rod,

a shaft of said conductive rod material supported.by and passing coaxially through the coil from the top portion to the bottom portion thereof,

said shaft being branched at its top end and offset laterally from its axis with its end bent upwardly from said offset, and

0143506

terminating into a third pole disposed opposite to said first pole,

the cross section of said pole being substantially larger than the cross section of said shaft,

the shaft at its bottom end terminating into a fourth pole of cross section substantially larger than the diameter of the shaft,

said fourth pole extending beyond the bottom of said coil,

such that when said coil is fitted around the neck of said container with the shaft extending coaxially within and through the opening of said neck, the fourth pole will be submerged in liquid when liquid is added to the container, and the second pole will be supported on an outer surface portion of the body of said container.

3. The interception coil of claim 2, wherein the first, second, third and fourth poles are substantially spherical.

4. The interception coil of claim 3, wherein the shaft is laterally offset at substantially right angles to its axis and the end thereof extends upwardly at substantially right angles to said offset.

5. The interception coil of claim 2, wherein the coil has a substantially cylindrical shape.

6. The interception coil of claim 5, wherein the coil is made of copper.

7. The interception coil of claim 2, wherein said first and third poles are disposed substantially 180° apart from each other.

8. The combination of a radiation and ion interception coil and a container cooperably associated with said coil, having an open neck portion and a body portion coextensive with the neck portion, said combination comprising,

a coil made of a rod or wire of conductive material helically wound in a clockwise direction disposed around the neck of said container,

said coil having a top portion associated with the top of said neck and a bottom portion extending to the bottom end of said neck and resting against the body portion of said container,

the top portion of the coil terminating into an upwardly extending branch having a first pole at its end of cross section substantially larger than the diameter of the rod, the bottom of said coil terminating into a branch extending laterally and tangentially from said coil and having a second pole at its end of cross section substantially larger than the cross section of said rod resting on a surface portion of the body of said container.

a shaft of said conductive rod material supported by and passing coaxially though the coil and into the neck of the container from the top portion to the bottom portion thereof,

said shaft being branched at its top end and offset laterally from its axis with its end bent upwardly from said offset and terminating into a third pole disposed opposite to said first pole rising above the opening of said neck portion, .

said cross section of the pole being substantially larger than the cross section of said shaft,

the shaft at its bottom end within said container terminating into a fourth pole of cross section substantially larger than the diameter of the shaft,

said fourth pole extending beyond the bottom of the coil and into the container sufficiently to be submerged in liquid added to the container.

9.    The combination of claim 8, wherein the first, second, third and fourth poles are substantially spherical.

10.    The combination of claim 9, wherein the shaft at substantially the opening of said neck is laterally offset at substantially right angles to its axis and the end thereof bent upwardly at substantially right angles to said offset.

11.    The combination of claim 8, wherein the coil and shaft are made of copper.

12.    The combination of claim 11, wherein said first and third poles rising above the opening of said neck are disposed substantially 180° apart from each other.

FIG.1

FIG. 2

FIG. 3